# EUROPEAN PATENT SPECIFICATION

(11) **EP 3 599 309 B1**
(45) Date of publication and mention of the grant of the patent: **02.11.2022**
(21) Application number: 19188351.1
(22) Date of filing: 26.12.2013
(51) Int. Cl.: D21H 17/59, D21C 9/02, B65D 57/00, B65D 85/48, C03B 40/033, D21H 27/00, D21H 27/10, D21H 21/12

(54) **USE OF WOOD PULP FOR THE MANUFACTURE OF GLASS PLATE-INTERLEAVING PAPER**
VERWENDUNG VON HOLZZELLSTOFF ZUR HERSTELLUNG VON GLASPLATTENZWISCHENLAGENPAPIER
UTILISATION DE PÂTE EN BOIS POUR LA FABRICATION DE PAPIER INTERCALAIRE DE PLAQUE DE VERRE

(30) Priority: 27.12.2012 JP 2012285315; 18.04.2013 JP 2013087570
(43) Date of publication of application: 29.01.2020
(62) Divisional of application: 13867979.0
(73) Proprietor: Tokushu Tokai Paper Co., Ltd., Shimada-shi, Shizuoka 427-8510 (JP)
(72) Inventor: ASAI, Yasuhiko, Sunto-gun, Shizuoka 411-8750 (JP); AKAHORI, Shinichi, Sunto-gun, Shizuoka 411-8750 (JP); HIRASAWA, Tomoki, Sunto-gun, Shizuoka 411-8750 (JP); TOMOTAKE, Yoshiaki, Sunto-gun, Shizuoka 411-8750 (JP)
(74) Representative: Hinkelmann, Klaus

(56) References cited:
- EP-A2- 0 347 154
- EP-A2- 0 802 228
- WO-A1-2007/007530
- JP-A- 2005 248 409
- JP-A- 2006 044 674
- JP-A- 2008 101 282
- JP-A- 2008 208 478
- JP-A- 2008 266 862
- US-A1- 2003 186 054

## Description

### TECHNICAL FIELD

The present invention relates to wood pulp for use in manufacturing package paper for packaging glass plates and interleaving paper to be inserted between glass plates, used in the process of storing and transporting glass plates for use in flat panel displays such as liquid crystal displays, plasma displays, organic electroluminescence (organic EL) displays and the like, in a laminated state.

### BACKGROUND ART

In general, during the course of storage of glass plates for flat panel displays in a laminated state, or during the course of distribution of transporting them by trucks and the like, paper which is so-called interleaving paper has been inserted between glass plates in order to prevent occurrences of abrasion by contacting glass plates on impact or prevent contamination of the surface of glass plates.

Glass plates for flat panel displays are used for high-definition displays, which are different from common architectural glass plates, vehicular glass plates, and the like. For this reason, the surface of glass plates for flat panel displays requires maintaining a clean surface so that contamination of the glass surface due to impurities contained on the surface of paper is extremely reduced, and requires having a superior flatness for a fast-response property or wide viewing angle.

Some types of interleaving paper for such a usage, for example, interleaving paper in which cracking of glass plates or surface abrasion can be prevented, and interleaving paper in which the surface of glass plates is not contaminated, have been proposed. For example, Patent Document 1 discloses a method of forming a fluorine coating film on the surface of interleaving paper. In addition, Patent Document 2 discloses interleaving paper to which a foamed sheet made of a polyethylene-based resin and a film made of a polyethylene-based resin are applied. Patent Document 3 discloses interleaving paper for glass plates, which is formed from pulp containing 50% by mass or more of bleached chemical pulp, and includes a specific alkylene oxide adduct and a water-soluble polyether-modified silicone. In addition, Patent Document 4 discloses interleaving paper for glass plates in which a resin content in paper is specified, and a raw material selected in view of contamination of the surface of glass is used.

### Prior Art Documents

### Patent Documents

Patent Document 1: Japanese Unexamined Patent Application, First Publication No. 2012-188785
Patent Document 2: Japanese Unexamined Patent Application, First Publication No. 2010-242057
Patent Document 3: Japanese Unexamined Patent Application, First Publication No. 2008-208478
Patent Document 4: Japanese Unexamined Patent Application, First Publication No. 2006-44674

EP 0 802 228 A2 discloses silicone compositions and uses thereof, in particular silicone compositions prepared by reacting at a temperature of 25 to 300°C a mixture of
(i) 1 to 100 parts by weight of a polyisobutylene compound;
(ii) 5 to 100 parts by weight of a polyorganosiloxane;
(iii) 0.5 to 20 parts by weight of at least one silicon compound; and
(iv) a catalytic amount of a catalyst.

The compositions are asserted to be resistant to phase separation and useful as foam control compositions in various foam producing systems. Moreover, a process for controlling foam in a foaming system is described, wherein the silicone compositions are added to the foaming or foam-producing system, in an amount sufficient to reduce foaming, as determined by routine experimentation. Usually, the silicone compositions are added at a concentration of 0.001 to 0.1 parts by weight based on the weight of the foaming system.

EP 0 347 154 A2 discloses a tissue paper having a basis weight of from 10 to 65 grams per square meter, and a density of no more than 0.6 grams/ml, the paper comprising cellulosic fibers and a polysiloxane material, in an amount of at least 0.004% polysiloxane based on the dry fiber weight of said tissue paper.

US 2003/186054 A1 discloses a pulp, comprising: at last 7% by weight hemicellulose; a viscosity less than 32 cP; a copper number less than 2; a weighted average fiber length less than 2.7mm; a coarseness less than 23 mg/100m; and a silicon content less than 50 ppm.

### DISCLOSURE OF INVENTION

### Technical Problems

However, the interleaving paper mentioned above could not completely prevent contamination of the surface of glass plates for flat panel displays. In some cases, a failure rate of glass plates may be actually increased due to contamination of the surface of glass plates for some reasons.

In particular, in view of profitability, recently an increased yield is required in the process of manufacturing flat panel displays and the like, and how to prevent contamination of the surface of glass plates for flat panel displays is important.

The present invention has an object to provide a use of wood pulp for the manufacture of interleaving paper which can remarkably prevent contamination on the surface of glass plates for use as substrate materials for flat panel displays for which a high degree of cleanliness and high quality without damages are required.

### Technical Solution

For example, it is known that if the surface of a glass plate is contaminated at the time of manufacturing a color filter substrate in an array process which is one of processes of manufacturing TFT liquid crystal displays, a problem such as disconnection or the like occurs. A color filter substrate is manufactured by forming a thin film such as a semiconductor film, an ITO film (transparent conductive film), an insulating film, an aluminum metal film or the like on a glass plate by means of sputtering, vacuum deposition method or the like. If contaminants exist on the surface of a glass plate, disconnection occurs in a circuit pattern formed from a thin film or short circuit caused by defects of an insulating film occurs. In addition, during manufacture of a color filter substrate, a pattern is formed on a glass plate by means of photolithography. If contaminants are present on the surface of the glass plate at the time of resist application in the aforementioned process, a pinhole is formed on the resist film after exposure or development, and as a result, disconnection or short circuit occurs. The same problems as described above are confirmed in the manufacture of organic EL displays. An organic EL display is manufactured by forming a thin film such as an ITO positive electrode, an organic emitting layer, a negative electrode and the like on a glass plate by means of sputtering, vapor deposition, printing or the like. For this reason, if a contaminant inhibiting the formation of a thin film exists on the surface of a glass plate, a problem of becoming non-luminescent occurs. It was difficult to specify a causality of such a contamination of a glass plate. It was first revealed in verification carried out by the inventors of the present application that the causality is silicone contained in the interleaving paper for glass plates.

The inventors of the present application discovered that the problems mentioned above can be overcome by setting an amount of silicone contained in wood pulp which is used in the manufacture of interleaving paper for glass plates (hereinafter, also referred to as "glass plate-interleaving paper") to a specified amount or less, thus completing the present invention, and setting an amount of silicone contained in interleaving paper for glass plates to a specified amount or less.

That is, the present invention relates to a use of wood pulp for the manufacture of a glass plate-interleaving paper for glass plates for TFT liquid crystal displays or organic EL displays, wherein silicone is contained in the wood pulp and wherein an amount of silicone contained in wood pulp is 0.5 ppm or less with respect to the absolute dry mass of the wood pulp. More particularly, the present invention relates to the use of the wood pulp for the manufacture of a glass plate-interleaving paper for glass plates for TFT liquid crystal displays or organic EL displays, wherein silicone is contained in the interleaving paper and wherein an amount of silicone contained in the paper is 0.5 ppm or less with respect to an absolute dry matter of the paper, and whereby the transfer of silicone to glass plates is controlled or inhibited, wherein silicone is contained in the wood pulp and wherein an amount of silicone contained in the wood pulp is 0.5 ppm or less with respect to an absolute dry mass of the wood pulp.

The amount of a silicone contained in wood pulp is preferably 0.1 ppm or less with respect to the absolute dry mass of the wood pulp.

The silicone mentioned above is preferably a silicone oil.

The silicone oil mentioned above is preferably a dimethylpolysiloxane.

Moreover, an interleaving paper for glass plates is described herein but not claimed, of which a raw material is wood pulp, and in which the amount of silicone contained in paper is 0.5 ppm or less with respect to the absolute dry matter of paper.

The amount of silicone contained in interleaving paper for glass plates is preferably 0.1 ppm or less with respect to the absolute dry matter of paper.

The silicone mentioned above is preferably a silicone oil.

The silicone oil mentioned above is preferably a dimethylpolysiloxane.

In addition, a non-claimed laminate of glass plates is described herein, and the aforementioned glass plate-interleaving paper formed from the aforementioned wood pulp according and/or the aforementioned interleaving paper for glass plates.

### Effects of the Invention

The glass plate-interleaving paper formed from wood pulp which is used in accordance with the present invention, can control or inhibit the transfer of silicone to glass plates. By controlling or inhibiting the transfer of silicone to glass plates as described above, circuit disconnection of a color film or the like in a process of manufacturing a TFT liquid crystal display and the like can be prevented.

### Modes for Carrying Out the Invention

When interleaving paper is used for glass plates, the silicone contained in interleaving paper tends to be transferred to glass plates. In particular, it has been clarified at present that if interleaving paper formed from wood pulp in which an amount of silicone exceeds 0.5 ppm, and interleaving paper in which an amount of silicone exceeds 0.5 ppm is used, the amount of the silicone transferred to glass plates is extremely increased, and as a result, this causes a problem at the time of forming a panel. Therefore, in the wood pulp used for the manufacture of glass plate-interleaving paper in accordance with the present invention, an amount of silicone contained in wood pulp is 0.5 ppm or less with respect to the absolute dry mass of wood pulp. Thereby, the amount of silicone contained in glass plate-interleaving paper formed from the wood pulp used in accordance with the present invention can be set to 0.5 ppm or less. In addition, the interleaving paper for glass plates which can be manufactured in accordance with the present invention is interleaving paper for glass plates formed from wood pulp, in which an amount of silicone contained in paper is 0.5 ppm or less with respect to the absolute dry matter of paper. Term "absolute dry" matter in the present invention means a state in which after drying an object to be dried, moisture does not substantially exist in the object. For example, a weight change per hour at room temperature (25°C) of an object in an "absolute dry" state is 1% or less, preferably 0.5% or less, and more preferably 0.1% by less.

In general, silicone is contained in wood pulp in many cases. This may be caused by frequently using a silicone-based defoamer as a defoamer used in order to prevent the reduction of a cleansing ability due to generation of foam during a process of manufacturing wood pulp, and in particular, during a cleansing process. Silicone originated from the silicone-based defoamer mentioned above remains in pulp. A silicone-based defoamer is produced by, for example, mixing a modified silicone, a surfactant and the like in a mixture of a silicone oil and a hydrophobic silica.

Therefore, in order to set an amount of silicone contained in glass plate-interleaving paper to 0.5 ppm or less, in particular, it is important that wood pulp as a raw material of interleaving paper does not contain a large amount of silicone. In the first mode of the present invention, although means for setting the amount of silicone contained in wood pulp as a raw material of interleaving paper to 0.5 ppm or less is not particularly limited, a non-silicone-based defoamer is preferably used as a deformer used during the manufacture of wood pulp.

Examples of a non-silicone-based defoamer include, for example, an inorganic oil-based defoamer, a higher alcohol-based defoamer, a fatty acid-based defoamer, a fatty acid ester-based defoamer, an amide-based defoamer, an amine-based defoamer, a phosphoric ester-based defoamer, a metallic soap-based defoamer, a sulfonic ester-based defoamer, a polyether-based defoamer, and a plant oil-based defoamer.

Examples of an inorganic oil-based defoamer include, for example, an inorganic oil such as a hydrocarbon oil or the like, an inorganic wax, and the like.

Examples of a higher alcohol-based defoamer include, for example, octyl alcohol, hexadecyl alcohol, and the like.

Examples of a fatty acid-based defoamer include, for example, palmitic acid, oleic acid, stearic acid, and the like.

Examples of a fatty acid ester-based defoamer include, for example, isoamyl stearate, glycerol monolicinolate, sorbitol monolaurate, sorbitol trioleate, and the like.

Examples of an amide-based defoamer include, for example, acrylate polyamine and the like.

Examples of an amine-based defoamer include, for example, diallylamine and the like.

Examples of a phosphoric ester-based defoamer include, for example, tributyl phosphate, sodium octylphosphate, and the like.

Examples of a metallic soap-based defoamer include, for example, aluminum stearate, calcium stearate, potassium oleate, and the like.

Examples of a sulfonic ester-based defoamer include, for example, sodium laurylsulfonate, sodium dodecylsulfonate, and the like.

Examples of a polyether-based defoamer include, for example, a polyoxyalkylene such as a (poly)oxyethylene (poly)oxypropylene adduct, or the like; a (poly)oxyalkylene alkyl ether such as diethylene glycol heptyl ether, polyoxyethylene oleyl ether, polyoxypropylene butyl ether, polyoxyethylene polyoxypropylene 2-ethylhexyl ether, an oxyethylene oxypropylene adduct to a higher alcohol having 8 or more carbon atoms or a secondary alcohol having 12 to 14 carbon atoms, or the like; a (poly)oxyalkylene (alkyl) aryl ether such as polyoxypropylene phenyl ether, polyoxyethylene nonyl phenyl ether or the like; an acetylene ether obtained by subjecting an acetylene alcohol such as 2,4,7,9-tetramethyl-5-decyne-4,7-diol, 2,5-dimethyl-3-hexyne-2,5-diol, 3-methyl-1-butyne-3-ol or the like to alkylene oxide-addition polymerization; a (poly)oxyalkylene fatty acid ester such as diethylene glycol oleic ester, diethylene glycol lauric ester, ethylene glycol distearic ester or the like; a (poly)oxyalkylene sorbitan fatty acid ester such as polyoxyethylene sorbitan monolaurate, polyoxyethylene sorbitan trioleate, or the like; a (poly)oxyalkylene alkyl (aryl) ether sulfuric ester salt such as sodium polyoxypropylene methyl ether sulfate, sodium polyoxyethylene dodecyl phenol ether sulfate or the like; a (poly)oxyalkylene alkyl phosphoric ester such as (poly)oxyethylene stearyl phosphoric ester or the like; a (poly)oxyalkylene alkylamine such as polyoxyethylene laurylamine or the like; polyoxyalkylene amide and the like.

Examples of a plant oil-based defoamer include, for example, plant oils such as soybean oil, corn oil, coconut oil, linseed oil, rape seed oil, cotton seed oil, sesame oil, castor oil and the like.

In addition, a non-silicone-based defoamer can include inorganic particles such as hydrophobic silica and the like. As a hydrophobic silica, a hydrophobically treated silica obtained by replacing a silanol group of a hydrophilic silica with an alkyl group such as a methyl group, is preferably used.

A non-silicone-based defoamer can also contain a surfactant and the like, if necessary. Therefore, a non-silicone-based defoamer may be in the form of an emulsion.

Wood pulp usable in the present invention is wood pulp such as nadelholz bleached kraft pulp (NBKP), laubholz bleached kraft pulp (LBKP), nadelholz bleached sulfite pulp (NBSP), laubholz bleached sulfite pulp (LBSP), thermomechanical pulp (TMP) or the like, alone or in combination thereof. Non-wood pulp formed from marijuana, bamboo, straw, kenaf, paper mulberry, paper birch, cotton or the like, modified pulp such as cationated pulp, mercerized pulp or the like, synthetic fiber or chemical fiber such as rayon, vinylon, nylon, acryl, polyester or the like, or microfibrillated pulp can be blended alone or in combination thereof into the aforementioned wood pulp as a main component. However, if a large amount of a resin component is contained in pulp, the resin component mentioned above may exhibit an adverse effect such as contamination of the surface of glass plates or the like. For this reason, chemical pulp with a reduced amount of a resin component as possible, such as nadelholz bleached kraft pulp, is preferably used alone. In addition, high yield pulp such as ground wood pulp contains a large amount of a resin component, and therefore, this is not preferable. When synthetic fiber or chemical fiber is mixed together therewith, a cutting property is improved and an operation property during forming interleaving paper into a flat plate form is improved. However, it should be noted that the recycling property in view of treatment of waste is impaired in this case.

In addition, an adhesive, an antifungal agent, various loading materials for making paper, a wet paper strengthening agent, a dry paper strengthening agent, a sizing agent, a coloring agent, a fixing agent, a yield improver, slime controller, and the like may be added to fiber for making paper which contains the aforementioned wood pulp as a main component, within a scope which does not impair the performance of the present invention, if necessary. Subsequently, the mixture can be subjected to making paper by means of a conventionally known Fourdrinier paper machine, cylinder paper machine, tanmo machine, combination machine between Fourdrinier paper machine and cylinder paper machine, or the like. It requires scrupulous care to prevent contamination of insects or contaminants during addition of the aforementioned chemicals.

If beating of pulp is carried out, when the wood pulp of the present invention is manufactured, an effect of increasing strength between paper layers can be expected. However, if due to carrying out beating of pulp, microfiber in the wood pulp increases, paper powder may be generated during use as interleaving paper. For this reason, increasing the beating degree to a more than necessary degree is not preferable. Therefore, a preferable beating degree in the present invention ranges from 300 to 650 ml c.s.f.

The amount of silicone contained in wood pulp used in accordance with the present invention and in glass plate-interleaving paper formed from the aforementioned wood pulp is preferably 0.4 ppm or less, more preferably 0.3 ppm or less, even more preferably 0.2 ppm or less, and in particular, preferably 0.1 ppm or less, with respect to the absolute dry matter of wood pulp or paper. If silicone is present in an amount exceeding 0.1 ppm, in the case of needing a very high-definition display for a mobile terminal and the like, the parts with circuit disconnection of a color film caused by a trace amount of silicone transferred onto glass may be highly visible because of high definition, and therefore, the display may be judged to be poor in quality.

Glass plate-interleaving paper, and in particular, glass plate-interleaving paper described herein can be obtained by using wood pulp in accordance with the present invention in accordance with a conventional method. During and/or after manufacture of glass plate-interleaving paper, a processing treatment such as a calender treatment, a super calender treatment, a softnip calender treatment, an emboss treatment or the like may be carried out. By carrying out a processing treatment, a surface property or the thickness can be adjusted.

As examples of silicone in the present invention, a silicone oil may be mentioned. A silicone oil is hydrophobic, and the molecular structure thereof may be in any form of a cyclic form, a linear form, or a branched form. A kinetic viscosity of a silicone oil at 25°C usually ranges from 0.65 to 100,000 mm²/s, and may range from 0.65 to 10,000 mm²/s.

Examples of a silicone oil include, for example, a linear organopolysiloxane, a cyclic organopolysiloxane, and a branched organopolysiloxane.

Examples of a linear organopolysiloxane, a cyclic organopolysiloxane, and a branched organopolysiloxane include, for example, organopolysiloxanes represented by the following general formulae (1), (2) and (3):

R¹₃SiO-(R¹₂SiO)ₐ-SiR¹₃ (1)

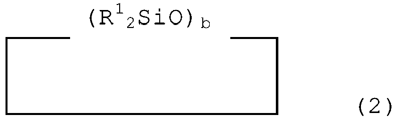

R¹_{(4-c)}Si(OSiR¹₃)_{c} (3)

(wherein
each R¹ is independently a hydrogen atom, a hydroxyl group, or a group selected from a substituted or unsubstituted monovalent hydrocarbon group and an alkoxy group;
a is an integer ranging from 0 to 1,000;
b is an integer ranging from 3 to 100; and
c is an integer ranging from 1 to 4, and is preferably an integer ranging from 2 to 4).

The substituted or unsubstituted monovalent hydrocarbon group is typically a monovalent saturated hydrocarbon group having 1 to 30 carbon atoms, preferably having 1 to 10 carbon atoms, and more preferably having 1 to 4 carbon atoms, which may be substituted or unsubstituted; a monovalent unsaturated hydrocarbon group having 2 to 30 carbon atoms, preferably having 2 to 10 carbon atoms, and more preferably having 2 to 6 carbon atoms, which may be substituted or unsubstituted; and a monovalent aromatic hydrocarbon group having 6 to 30 carbon atoms, and more preferably having 6 to 12 carbon atoms, which may be substituted or unsubstituted.

Examples of a monovalent saturated hydrocarbon group having 1 to 30 carbon atoms include, for example, a linear or branched alkyl group such as a methyl group, an ethyl group, a n-propyl group, an isopropyl group, a n-butyl group, an isobutyl group, a sec-butyl group, a tert-butyl group, a pentyl group, a hexyl group, a heptyl group, an octyl group, a nonyl group, a decyl group or the like, as well as a cycloalkyl group such as a cyclopentyl group, a cyclohexyl group, a cycloheptyl group, a cyclooctyl group or the like.

Examples of a monovalent unsaturated hydrocarbon group having 2 to 30 carbon atoms include, for example, a linear or branched alkenyl group such as a vinyl group, a 1-propenyl group, an allyl group, an isopropenyl group, a 1-butenyl group, a 2-butenyl group, a pentenyl group, a hexenyl group or the like; a cycloalkenyl group such as a cyclopentenyl group, a cyclohexenyl group or the like; a cycloalkenylalkyl group such as a cyclopentenylethyl group, a cyclohexenylethyl group, a cyclohexenylpropyl group, or the like; and an alkynyl group such as an ethynyl group, a propargyl group or the like.

Examples of a monovalent aromatic hydrocarbon group having 6 to 30 carbon atoms include, for example, an aryl group such as a phenyl group, a tolyl group, a xylyl group, a mesityl group or the like. A phenyl group is preferable. The aromatic hydrocarbon group in the specification of the present application includes a group in which an aromatic hydrocarbon and an aliphatic saturated hydrocarbon are combined, in addition to a group consisting of only an aromatic hydrocarbon. Examples of a group in which an aromatic hydrocarbon and an aliphatic saturated hydrocarbon are combined include, for example, an aralkyl group such as a benzyl group, a phenethyl group or the like.

The hydrogen atoms on the aforementioned monovalent hydrocarbon group may be substituted by one or more substituents. The aforementioned substituents can be selected from, for example, a halogen atom (a fluorine atom, a chlorine atom, a bromine atom, and an iodine atom), a hydroxyl group, and an organic group containing a carbinol group, an epoxy group, a glycidyl group, an acyl group, a carboxyl group, an amino group, a methacryl group, a mercapto group, an amide group, an oxyalkylene group, and the like. More particularly, examples thereof include a 3,3,3-trifluoropropyl group, a 3-chloropropyl group, a 3-hydroxypropyl group, a 3-(2-hydroxyethoxy)propyl group, a 3-carboxypropyl group, a 10-carboxydecyl group, a 3-isocyanatepropyl group, and the like.

As an alkoxy group, examples thereof include a methoxy group, an ethoxy group, a propoxy group and the like. A methoxy group or an ethoxy group is preferable, and a methoxy group is more preferable.

More particularly, examples of a linear organopolysiloxane include a dimethylpolysiloxane in which both terminals of the molecular chain are capped with trimethylsiloxy groups (from a dimethylsilicone with a low viscosity such as 2 mPa·s, 6 mPa·s or the like, to a dimethylsilicone with a high viscosity such as 1,000,000 mPa·s or the like), an organohydrogenpolysiloxane, a methylphenylpolysiloxane in which both terminals of the molecular chain are capped with trimethylsiloxy groups, a copolymer of methylphenylsiloxane and dimethylsiloxane in which both terminals of the molecular chain are capped with trimethylsiloxy groups, a diphenylpolysiloxane in which both terminals of the molecular chain are capped with trimethylsiloxy groups, a copolymer of diphenylsiloxane and dimethylsiloxane in which both terminals of the molecular chain are capped with trimethylsiloxy group, trimethylpentaphenyltrisiloxane, phenyl(trimethylsiloxy)siloxane, a methylalkylpolysiloxane in which both terminals of the molecular chain are capped with trimethylsiloxy groups, a copolymer of methylaklylsiloxane and dimethylpolysiloxane in which both terminals of the molecular chain are capped with trimethylsiloxy groups, a copolymer of methyl(3,3,3-trifluoropropyl)siloxane and dimethylsiloxane in which both terminals of the molecular chain are capped with trimethylsiloxy groups, an α,ω-dihydroxypolydimethylsiloxane, an α,ω-diethoxypolydimethylsiloxane, 1,1,1,3,5,5,5-heptamethyl-3-octamethyltrisiloxane, 1,1,1,3,5,5,5-heptamethyl-3-dodecyltrisiloxane, 1,1,1,3,5,5,5-heptamethyl-3-hexadecyltrisiloxane, tristrimethylsiloxymethylsilane, a tristrimethylsiloxyalkylsilane, tetrakistrimethylsiloxysilane, tetramethyl-1,3-dihydroxydisiloxane, octamethyl-1,7-dihydroxytetrasiloxane, hexamethyl-1,5-diethoxytrisiloxane, hexamethyldisiloxane, octamethyltrisiloxane, a higher alkoxy-modified silicone, a higher fatty acid-modified silicone, dimethiconol, and the like.

Examples of a cyclic organopolysiloxane includes hexamethylcyclotrisiloxane (D3), octamethylcyclotetrasiloxane (D4), decamethylcyclopentasiloxane (D5), dodecamethylcyclohexasiloxane (D6), 1,1-diethylhexamethylcyclotetrasiloxane, phenylheptamethylcyclotetrasiloxane, 1,1-diphenylhexamethylcyclotetrasiloxane, 1,3,5,7-tetravinyltetramethylcyclotetrasiloxane, 1,3,5,7-tetramethylcyclotetrasiloxane, 1,3,5,7-tetracyclohexyltetramethylcyclotetrasiloxane, tris(3,3,3-trifluoropropyl) trimethylcyclotrisiloxane, 1,3,5,7-tetra(3-methacryloxypropyl) tetramethylcyclotetrasiloxane, 1,3,5,7-tetra(3-acryloxypropyl) tetramethylcyclotetrasiloxane, 1,3,5,7-tetra(3-carboxypropyl) tetramethylcyclotetrasiloxane, 1,3,5,7-tetra(3-vinyloxypropyl) tetramethylcyclotetrasiloxane, 1,3,5,7-tetra(p-vinylphenyl) tetramethylcyclotetrasiloxane, 1,3,5,7-tetra[3-(p-vinylphenyl)propyl]tetramethylcyclotetrasiloxane, 1,3,5,7-tetra(N-acryloyl-N-methyl-3-aminopropyl) tetramethylcyclotetrasiloxane, 1,3,5,7-tetra(N,N-bis(lauroyl)-3-aminopropyl)tetramethylcyclotetrasiloxane, and the like.

Examples of a branched organopolysiloxane include methyltristrimethylsiloxysilane, ethyltristrimethylsiloxysilane, propyltristrimethylsiloxysilane, tetrakistrimethylsiloxysilane, phenyltristrimethylsiloxysilane, and the like.

As a silicone oil in the present invention, dimethylpolysiloxane, diethylpolysiloxane, methylphenylpolysiloxane, a polydimethyl polydiphenylsiloxane copolymer, polymethyl-3,3,3-trifluoropropylsiloxane and the like are preferable. As a silicone in the present invention, dimethylpolysiloxane is typically used.

A silicone oil in the present invention may be a modified silicone oil. Examples of a modified silicone oil include, for example, a polyoxyalkylene-modified silicone oil.

A polyoxyalkylene-modified silicone oil is a silicone oil in which a polyoxyalkylene group is bonded via a silicon-carbon bond in a molecule, preferably exhibits a water-solubility at 25°C, and is more preferably a nonion-based one.

A polyoxyalkylene-modified silicone oil is, in particular, a copolymer between a polyoxyalkylene and a silicone oil formed from a linear or branched siloxane, for example. There are various types thereof. In particular, the silicone oils represented by the following formula (4) are preferable.

R²₃SiO-(R¹₂SiO)_{d}-(R¹ASiO)ₑ-SiR²₃ (4)

(wherein
each R¹ is independently the same as described above,
each R² is independently R¹ or A,
each A is independently a group represented by R³G, in which R³ is a substituted or unsubstituted divalent hydrocarbon group, and G represents a polyoxyalkylene group containing at least one type of an alkylene oxide having 2 to 5 carbon atoms such as ethylene oxide, propylene oxide or the like,
d represents an integer ranging from 1 to 500, and
e represents an integer ranging from 1 to 50).

Examples of a substituted or unsubstituted divalent hydrocarbon group include, for example, a linear or branched divalent hydrocarbon group, examples of which include a linear or branched alkylene group having 1 to 30 carbon atoms such as a methylene group, a dimethylene group, a trimethylene group, a tetramethylene group, a pentamethylene group, a hexamethylene group, a heptamethylene group, an octamethylene group, or the like; an alkenylene group having 2 to 30 carbon atoms such as a vinylene group, an allylene group, a butenylene group, a hexenylene group, an octenylene group, or the like; an arylene group having 6 to 30 carbon atoms such as a phenylene group, a diphenylene group or the like; an alkylene arylene group having 7 to 30 carbon atoms such as a dimethylene phenylene group or the like; and a group in which hydrogen atoms binding to carbon atoms of the aforementioned groups are at least partially substituted with a halogen atom such as a fluorine atom or the like, a hydroxyl group, or an organic group containing a carbinol group, an epoxy group, a glycidyl group, an acyl group, a carboxyl group, an amino group, a methacryl group, a mercapto group, an amide group, an oxyalkylene group or the like. The divalent hydrocarbon group is preferably an alkylene group having 1 to 30 carbon atoms, preferably an alkylene group having 1 to 6 carbon atoms, and more preferably an alkylene group having 3 to 5 carbon atoms.

For example, as examples of a polyoxyalkylene-modified silicone oil, the following compounds can be mentioned. 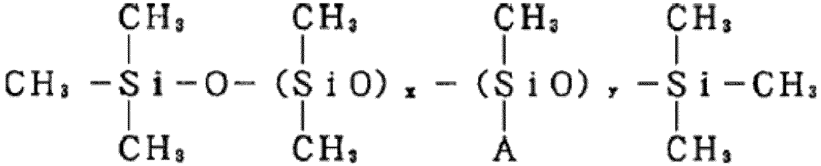 (wherein
x ranges from 20 to 160, y ranges from 1 to 25, and a value of x/y ranges from 50 to 2,
A is, for example, -(CH₂)₃O-(CH₂CH₂O)ₘ-(CH₂CH₂CH₂O)ₙ-R⁴, m ranges from 7 to 40, n ranges from 0 to 40, a value of m + n is at least 1, A may be a graft-polymerized one or a random-polymerized one, and R⁴ represents a hydrogen atom or the aforementioned substituted or unsubstituted monovalent hydrocarbon group. Preferably, m ranges from 7 to 30 and n ranges from 0 to 30).

In addition, as an example of a modified silicone oil, for example, an aminoalkyl-modified silicone oil may be mentioned.

An aminoalkyl-modified silicone oil is a silicone oil in which an aminoalkyl group is bonded to the molecule via a silicon-carbon bond, and preferably exhibits a viscosity ranging from 10 to 100,000 cs at room temperature, and in particular, 25°C.

As the aforementioned aminoalkylsilicone oil, one in which G is substituted by a formula: -(NR⁴CH₂CH₂)_{z}NR⁴₂ (wherein each R⁴ independently the same as described above, and z is a number of 0 ≤ z ≤ 4) in the aforementioned formula (4) may be mentioned.

Interleaving paper obtained by using the wood pulp in accordance with the present invention, and in particular, glass plate-interleaving paper described herein is used by being inserted between glass plates. For example, the aforementioned glass plate-interleaving paper is typically inserted between two glass plates, and a plurality of glass plates with the glass plate-interleaving paper inserted form a laminate as a whole. The laminate mentioned above is to be stored and transported. In addition, interleaving paper formed from the wood pulp used in accordance with the present invention, and in particular, the glass plate-interleaving paper described herein may be used for packaging a single glass plate or the laminate of glass plates mentioned above.

The glass plates are glass plates for flat panel displays such as plasma display panels, liquid crystal display panels (in particular, TFT liquid crystal display panels), organic EL display panels and the like. Microelectrodes, bulkheads and the like are formed on the surface of the glass plates for flat panel displays. By using glass plate-interleaving paper formed from wood pulp in accordance with the present invention, and in particular, glass plate-interleaving paper described herein, the transfer of silicone to glass plates can be controlled or inhibited. For this reason, even if microelectrodes, bulkheads and the like are formed on the surface of the glass plates, problems caused by silicone can be controlled and inhibited. As a result, defects of displays can be controlled and inhibited.

In particular, in accordance with growing in size of displays, the size and weight of the glass plates for flat panel displays increase. The glass plate-interleaving paper formed from by using the wood pulp in accordance with the present invention, and in particular, glass plate-interleaving paper described herein can well protect the surface of such glass plates with a large size and a large weight. In particular, the glass plate-interleaving paper formed from the wood pulp in accordance with the present invention, and in particular, glass plate-interleaving paper described herein has an extremely reduced amount of silicone. For this reason, even if pressure is exerted on interleaving paper by glass plates with a large weight, the transfer of silicone to glass plates can be controlled and inhibited. Therefore, glass plate-interleaving paper formed from the wood pulp in accordance with the present invention, and in particular, glass plate-interleaving paper described but not claimed herein can be suitably used for glass plates for flat panel displays in which cleanliness of the surface is particularly required.

### EXAMPLES

Hereinafter, the present invention is described in detail with reference to Examples and Comparative Examples. It should be understood that the scope of the present invention is not limited to these Examples.

### (1) Quantitative Measurement of Silicone

Interleaving paper was cut into an about 1 cm square, and subjected to soxhlet extraction with hexane for about 3.5 hours. The obtained extract was concentrated by means of a rotary evaporator. The residue was re-dissolved in 1 mL of deuterated chloroform and subjected to a ¹H-NMR measurement. The quantitative determination was carried out according to an absolute calibration curve method using a deuterated chloroform solution of a polydimethylsiloxane as a standard product for forming a reference standard. As an NMR device, AVANCE 500 model (manufactured by Bruker BioSpin Co., Ltd.) was used.

### (2) Transfer Test to Glass (Transportation Test)

Urethane foam was placed on a glass mount face on an L-shaped mount frame made of aluminum at an angle of 75 degrees. 120 glass plates, each glass plate having a size of 680 mm × 880 mm × 0.7 mm, and glass plate-interleaving paper inserted between every glass plates were set against a back face which vertically extends from a rear end part of a mount face for vertically mounting glass plates, so that the glass plates were set parallel to the back face. The glass plates were fixed thereon by putting a strip-shaped belt which was fixed to the mount frame, along the whole periphery from the rear end part to the back face. The mount frame to which glass plates had been set as described above was completely covered with a packaging material in order to prevent contamination of dust and the like from the outside. Subsequently, transportation test by a truck was carried out. The test was carried out under the transportation conditions of 1,000 km of transportation distance (stored for 5 days under the circumstance of 40°C × 95% RH during transportation). Subsequently, the presence or absence of the silicone on the surface of glass plates was confirmed by means of a FT-IR analysis.

### Manufacture of Wood Pulp (not used in accordance with the present invention)

In an apparatus for manufacturing nadelholz bleached kraft pulp, comprising a digesting process, a cleaning process, an oxygen delignification reaction process, and a multistage bleaching process with chlorine dioxide and hydrogen peroxide, an appropriate amount of an undiluted solution of "Pronal A 5044" (manufactured by TOHO Chemical Industry Co., Ltd.) of an inorganic oil-based defoaming agent which was a non-silicone-based defoaming agent was continuously added as a defoaming agent in a cleansing solution of a drum washer immediately after knots were removed after the digesting process. In addition, an appropriate amount of "Pronal A 5044", which was the same as described above, was added as a defoamer to be added in a wash press in the press cleansing process. As described above, nadelholz bleached kraft pulp A was obtained using a non-silicone-based defoamer during the manufacturing processes.

In addition, nadelholz bleached kraft pulp B was obtained in the same manner as described above, with the exception of using "SN defoamer 551K" (manufactured by SAN NOPCO Limited) which was a silicone-based defoamer, as a defoamer.

Example 1 (not according to the present invention) As wood pulp, nadelholz bleached kraft pulp A in an amount of 100 parts by weight was prepared, and disaggregated to prepare a slurry having a beating degree of 520 ml c.s.f. Polyacrylamide (product name: Polystron 1250, manufactured by Arakawa Chemical Industries Ltd.) was added as a paper strengthening agent in an amount of 0.4 parts by mass with respect to the total pulp mass. Thereby, a pulp slurry with a 0.4% concentration was prepared. The obtained pulp slurry was subjected to paper making by means of a Fourdrinier paper machine. Thereby, glass plate-interleaving paper with a base weight of 50 g/m² was obtained.

### Example 2 (according to the present invention)

Glass plate-interleaving paper having a base weight of 50 g/m² was obtained in the same manner as that of Example 1, with the exception of using a mixture of 80 parts by weight of nadelholz bleached kraft pulp A and 20 parts by weight of nadelholz bleached kraft pulp B as wood pulp.

### Comparative Example 1

Glass plate-interleaving paper having a base weight of 50 g/m² was obtained in the same manner as that of Example 1, with the exception of using 100 parts by weight of nadelholz bleached kraft pulp B as wood pulp.

The amount of silicone contained in the glass plate-interleaving paper obtained in each of the Examples and Comparative Example is shown in Table 1. The amount of silicone contained in the glass plate-interleaving paper also indicates the amount of silicone contained in the wood pulp used in the manufacturing the aforementioned interleaving paper.

**Table 1**

| | Amount of silicone contained (ppm) |
|---|---|
| Example 1 | <0.01 |
| Example 2* | 0.4 |
| Comparative Example 1 | 2.0 |

| | |
|---|---|
| *according to the present invention | |

As a result of confirming the transfer of the glass plate-interleaving paper obtained in each of the Examples and Comparative Example to the glass plates in the transportation test, on the surface of the glass plates using the interleaving paper of Example 1, no silicone was detected at all. On the surface of the glass plates using the interleaving paper of Example 2, a very small amount of silicone was detected, but disconnection of color film was not observed when an array formation of a liquid crystal panel was carried out using the aforementioned glass plates. On the other hand, on the surface of glass plates using the interleaving paper of Comparative Example 1, silicone contamination was confirmed. When an array formation of a liquid crystal panel was carried out using the aforementioned glass plates, disconnection of color film was observed.

From the aforementioned results, it can be seen that since an amount of silicone contained in wood pulp of the present invention is 0.5 ppm or less with respect to the absolute dry mass of wood pulp of the present invention, glass plate-interleaving paper formed from the wood pulp as used according to the present invention also contains an amount of silicone which is 0.5 ppm or less, and therefore, the transfer of silicone to glass plates from the aforementioned glass plate-interleaving paper can be prevented, and as a result, glass plates with which an array formation of a liquid crystal panel can be suitably carried out can be manufactured.

## Claims

1. Use of a wood pulp for the manufacture of a glass plate-interleaving paper for glass plates for TFT liquid crystal displays or organic EL displays, wherein silicone is contained in the interleaving paper and wherein an amount of silicone contained in the paper is 0.5 ppm or less with respect to an absolute dry matter of the paper, and whereby the transfer of silicone to glass plates is controlled or inhibited, wherein silicone is contained in the wood pulp and wherein an amount of silicone contained in the wood pulp is 0.5 ppm or less with respect to an absolute dry mass of the wood pulp.

2. Use of the wood pulp according to claim 1, wherein an amount of silicone contained in wood pulp is 0.1 ppm or less with respect to an absolute dry mass of the wood pulp.

3. Use of the wood pulp according to claim 1 or 2, wherein said silicone is a silicone oil.

4. Use of the wood pulp according to claim 3, wherein said silicone oil is a dimethylpolysiloxane.

## Patentansprüche

1. Verwendung von Holzzellstoff für die Herstellung eines Glasplatten-Zwischenlagepapiers für Glasplatten für TFT-Flüssigkristallanzeigen oder organische EL-Anzeigen, wobei Silikon in dem Zwischenlagepapier enthalten ist und wobei eine Menge an Silikon, die in dem Papier enthalten ist, 0,5 ppm oder weniger in Bezug auf eine absolute Trockenmasse des Papiers beträgt, und wodurch die Übertragung von Silikon auf Glasplatten kontrolliert oder verhindert wird, wobei Silikon in dem Holzzellstoff enthalten ist und wobei eine Menge an Silikon, die in dem Holzzellstoff enthalten ist, 0,5 ppm oder weniger in Bezug auf eine absolute Trockenmasse des Holzschliffs beträgt.

2. Verwendung des Holzzellstoffs nach Anspruch 1, wobei die Menge des im Holzschliff enthaltenen Silikons 0,1 ppm oder weniger, bezogen auf die absolute Trockenmasse des Holzschliffs, beträgt.

3. Verwendung des Holzzellstoffs nach Anspruch 1 oder 2, wobei das Silikon ein Silikonöl ist.

4. Verwendung des Holzzellstoffs nach Anspruch 3, wobei das Silikonöl ein Dimethylpolysiloxan ist.

## Revendications

1. Utilisation d'une pâte de bois pour la fabrication d'un papier d'entrelacement de plaques de verre pour des plaques de verre pour des affichages à cristaux liquides TFT ou des affichages organiques EL, dans laquelle du silicone est contenu dans le papier d'entrelacement et dans laquelle une quantité de silicone contenue dans le papier est de 0,5 ppm ou moins par rapport à une matière sèche absolue du papier, et dans laquelle le transfert de silicone vers les plaques de verre est contrôlé ou inhibé, dans laquelle du silicone est contenu dans la pâte de bois et dans laquelle une quantité de silicone contenue dans la pâte de bois est de 0,5 ppm ou moins par rapport à une masse sèche absolue de la pâte de bois.

2. Utilisation de la pâte de bois selon la revendication 1, dans laquelle une quantité de silicone contenue dans la pâte de bois est de 0,1 ppm ou moins par rapport à une masse sèche absolue de la pâte de bois.

3. Utilisation de la pâte de bois selon la revendication 1 ou 2, dans laquelle ladite silicone est une huile de silicone.

4. Utilisation de la pâte de bois selon la revendication 3, dans laquelle ladite huile de silicone est un diméthylpolysiloxane.
